(19) Europäisches Patentamt
European Patent Office
Office européen des brevets

(11) **EP 4 358 078 A1**

(12) **EUROPEAN PATENT APPLICATION**
published in accordance with Art. 153(4) EPC

(43) Date of publication:
**24.04.2024 Bulletin 2024/17**

(21) Application number: **22890139.3**

(22) Date of filing: **12.08.2022**

(51) International Patent Classification (IPC):
*G09G 5/00* (2006.01)  *G09G 5/10* (2006.01)

(52) Cooperative Patent Classification (CPC):
**G09G 5/00; G09G 5/10**

(86) International application number:
**PCT/KR2022/012141**

(87) International publication number:
**WO 2023/080403 (11.05.2023 Gazette 2023/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.11.2021 KR 20210150394**

(71) Applicant: Samsung Electronics Co., Ltd.
**Suwon-si, Gyeonggi-do 16677 (KR)**

(72) Inventors:
• KIM, Moonyoung
**Suwon-si Gyeonggi-do 16677 (KR)**
• KANG, Jeongil
**Suwon-si Gyeonggi-do 16677 (KR)**
• KIM, Keonwoo
**Suwon-si Gyeonggi-do 16677 (KR)**

(74) Representative: Gulde & Partner
**Patent- und Rechtsanwaltskanzlei mbB
Wallstraße 58/59
10179 Berlin (DE)**

(54) **DISPLAY SYSTEM AND DRIVING METHOD OF DISPLAY MODULE**

(57) A display system configured to quickly restore a screen display without re-starting, even though the power supply from the outside is temporarily interrupted. The display system includes a display to display a screen based on image information to be displayed, and a power supply configured to support the display module and supply power to the display module in a wireless manner. The display is configured to, when the display is spaced apart from the power supply by a predetermined distance or more, selectively operate in one of a power saving mode for lowering luminance of at least a portion of the screen and an ultra-power saving mode for turning OFF at least a portion of the screen while maintaining a turned-on state of the display.

*FIG. 2*

EP 4 358 078 A1

## Description

## FIELD

The present disclosure relates to a display module that operates with electric power received in a wireless manner from the outside, and a display system including the same. More particularly, the disclosure relates to a display module capable of quickly recovering its screen display without restart up even though the power supply from the outside is temporarily interrupted, and such a display system including the same.

## BACKGROUND

There is a need for a display module that can be variously utilized depending on various using purposes. With this demand, while most traditional televisions (TVs) have been used only for showing television programs, recently a single display module, which can be used as a television to show television programs, may also be used as a picture frame for digital art works, a photo album or a personal monitor in case where it is not used as a television. Such a need for a display module that can be adaptively utilized in accordance with various purposes and situations does not simply arise in relation to a living room TV, but is expanding to a variety of display modules with various sizes (e.g., personal display modules of compact size). In order to be adaptively utilized to meet various using purposes, the display module needs to be freely re-arranged (e.g., as tilted or pivoted at various angles) according to user's demands, rather than being fixedly kept in a certain arrangement.

## SUMMARY

## TECHNICAL PROBLEM

In case where free tilting or pivoting of a display module is implemented with a mechanical configuration built into the display module itself, there arises a problem that the display module increases in its weight and thickness and its manufacturing cost can increase. In case where the display module, which is being supplied via a wired power cable attached thereto, is rearranged by tilting or pivoting, the user's convenience and aesthetic impression in use may be affected by the power cable. In addition, in case where the power supply to the display module is interrupted while the display module is being rearranged and therefore, a restart-up of the display module is required after the power supply is resumed, the user experience may be significantly impaired.

One aspect of the present disclosure is to provide a display module that can be freely tilted or pivoted with a user's simple operation, without any additional mechanical configuration in the display module itself, and a display system including the same.

Another aspect of the present disclosure is to provide a display module configured to, even if the power supply to the display module from the outside is temporarily interrupted while the display module is re-arranged, maintain the turned-on state of the display module continuously so as to quickly restore its screen display without restart-up thereof upon completion of the rearrangement, and a display system including the same.

## TECHNICAL SOLUTION

According to one aspect of the disclosure, provided is a display system comprising a display displaying a screen based on image information to be displayed, and a power supply configured to support the display and supply electric power to the display in a wireless manner, wherein when the display is spaced apart from the power supply by a predetermined distance or more, the display is configured to selectively operate in one of a power saving mode for lowering luminance of at least a portion of the screen and an ultra-power saving mode for turning OFF at least a portion of the screen while maintaining a turned-on state of the display module.

According to another aspect of the present disclosure, provided is a method for driving a display including a power supply unit and a light emitting unit, the method comprising displaying a screen by controlling light emission of the light emitting unit based on image information to be displayed, determining a decrease in a voltage of a current applied from the power supply unit, and in response to determining the decrease in the voltage, selectively entering either one of a power saving mode in which luminance of at least a portion of the light emitting unit is lowered or an ultra-power saving mode in which at least a portion of the light emitting unit is turned OFF while maintaining a turned-on state of the display.

## ADVANTEGEOUS EFFECTS

The display module according to various embodiments of the disclosure can be disposed and used on a stand configured to support the display module at various angles and supply power to the display module in a wireless manner. Thus, the display module can be freely re-arranged (e.g., tilted or pivoted) with respect to the stand without any physical restrictions by a wired power cable, depending upon various using purposes.

The display module according to various embodiments of the disclosure can operate in either a power saving mode or an ultra-power saving mode with a small amount of power charged in a power storage element in the display module, without having to equip a complicated charge/discharge battery circuit, even though the power supply from the stand is temporarily interrupted while the display module is rearranged with respect to the stand. Therefore, the display module can maintain its turned-on state continuously only with minimal power consumption so as to quickly restore the screen display without restart-up when the power supply gets back to normal subsequent to completion of rearrangement of the display module.

## BRIEF DESCRIPTION OF THE DRAWINGS

The above and other aspects, features, and advantages of certain embodiments of the present disclosure will be more apparent from the following description taken in conjunction with the accompanying drawings, in which:

FIGS. 1A, 1B and 1C are perspective views respectively showing various using examples of a display system according to an embodiment of the disclosure.

FIG. 2 is a schematic block diagram showing a functional configuration of a display system according to an embodiment of the disclosure.

FIG. 3A is a diagram schematically illustrating a cross-section of a stand having a power transmission (TX) resonator according to an embodiment of the disclosure. FIG. 3B is a graphic diagram conceptually illustrating a change in voltage received by a reception (RX) resonator of a display module depending on a distance from the stand illustrated in FIG. 3A.

FIG. 4 is a circuit diagram illustrating an exemplary circuit configuration of the display module corresponding to the stand of FIG. 3A according to an embodiment of the disclosure.

FIGS. 5A, 5B and 5C are schematic circuit diagrams respectively showing a current flow generated in the display module and an operating state of a light emitting unit, depending upon a change in relative position between the display module shown in FIG. 4 and the stand shown in FIG. 3A, according to an embodiment of the disclosure.

FIG. 6 illustrates a change in voltage and current in each part of the display module over time, in case that the display module is initially arranged to be supported by a support surface of the stand.

FIG. 7 illustrates a change in voltage and current in each part of the display module and a controlled status of a switch SW, as the display module is moved further away from the support surface of the stand.

FIG. 8 is a diagram illustrating an example of using the display module in which the display module is pivoted and re-arranged with respect to the stand, according to an embodiment of the disclosure.

FIG. 9A is a side view schematically illustrating a side of a stand and a display module disposed to be supported by the stand according to an embodiment of the disclosure. FIG. 9B is a graphic diagram conceptually illustrating a change in voltage received by the display module depending on a distance from the stand illustrated in FIG. 9A.

FIG. 10 is a circuit diagram illustrating an exemplary circuit configuration of the display module according to an embodiment of the disclosure.

FIGS. 11A and 11B are diagrams showing a current flow generating in the display module and an operating state of a light emitting unit, depending upon a change in position of the display module with respect to the stand , according to an embodiment of the disclosure.

FIG. 12 is a graph showing a change in voltage and current in each part of the display module, when the power supply between receiving electrodes of the display module and transmitting electrodes of the stand is interrupted.

FIG. 13 is a circuit diagram schematically illustrating the configuration of an exemplary display module with modification in a portion of an internal circuit of the display module shown in FIG. 11B, according to an embodiment of the disclosure.

FIG. 14 is a diagram illustrating an example of using the display module in which the display module is pivoted from its original position and re-arranged on the stand, according to an embodiment of the disclosure.

## DETAILED DESCRIPTION OF EXEMPLARY EMBODIMENTS

Hereinafter, various embodiments will be described in detail with reference to the accompanying drawings. In the following description, specific details, such as detailed configurations and components, will be provided merely to help a general understanding of various embodiments of the disclosure. In connection with the description of the drawings, the same or similar reference numerals may be used for the same or similar components. In addition, throughout the drawings and their related descriptions, descriptions of well-known functions and configurations may be omitted for clarity and conciseness.

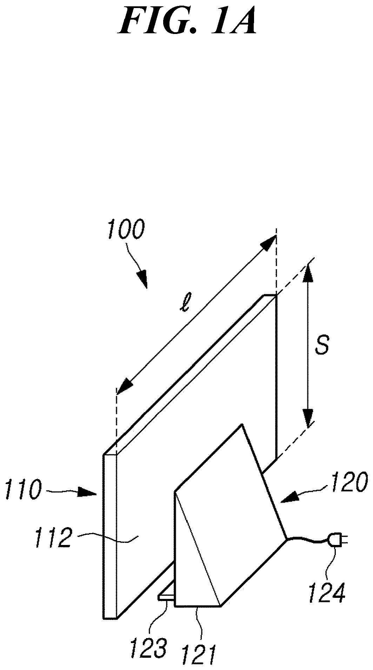

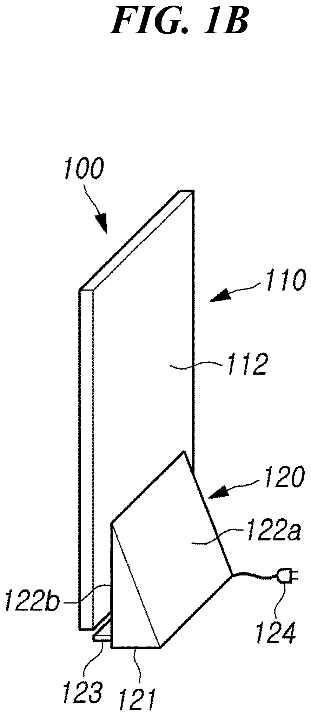

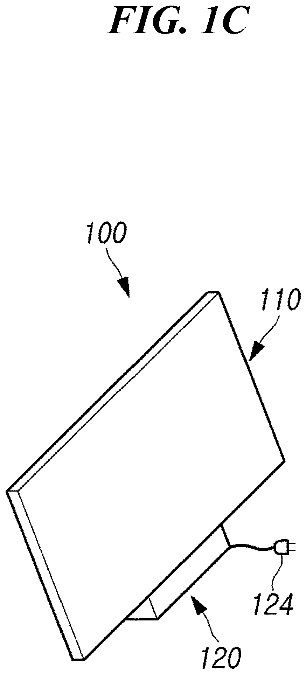

FIGS. 1A, 1B and 1C are perspective views schematically showing various using examples of a display system 100 according to an embodiment of the disclosure. As illustrated, the display system 100 may include a display module 110 for displaying a screen, and a stand 120 configured to support the display module 110.

According to various embodiments of the disclosure, the display module 110 may be an image or video display device configured to display, on a screen, broadcast or various image signals received from the outside in a wired or wireless manner or obtained in a predetermined manner. According to various embodiments of the disclosure, the display module 110 may be an image display device that can be utilized for various using purposes, including e.g., television (TV), smart TV, IP TV, smartphone, tablet PC, personal monitor, digital picture frame, and/or photo album, and the present disclosure is not limited in relation to a specific use of the display module. For example, according to some embodiments of the present disclosure, the display module 110 may operate as a TV to receive and display a broadcast signal while the user is watching TV, and operate to display a certain still image or a moving picture (e.g., a digital picture, a photo, or other various graphic displays) when the user stops watching TV. According to various embodiments of the disclosure, the display module 110 may be a display module of various types such as e.g., LED, OLED, Micro-LED, LCD, Mini-LED, Quantum-dot LED and so on, and the present disclosure is not limited to any specific type of display module.

According to an embodiment of the disclosure, the display module 110 may be of a rectangular shape having a longer side ℓ and a shorter side S of different lengths as shown in FIG. 1A, and the present disclosure is not limited thereto. In this context, FIG. 1A illustrates an arrangement in which the display module 110 is used in a landscape mode where the longer side ℓ is horizontally arranged on the stand 120, and FIG. 1B illustrates another arrangement in which the display module 110 is pivotally rotated from that of FIG. 1A and used in a portrait mode where the longer side ℓ is vertically arranged on the stand 120.

According to an embodiment of the disclosure, the stand 120 may include a bottom surface 121 of a rectangular shape that can be placed in contact with the ground or floor, and support surfaces 122a and 122b extending upward from the bottom surface 121, the support surfaces 122a and 122b each being configured to support a rear side 112 of the display module 110. According to an embodiment of the disclosure, each of the support surfaces 122a and 122b on both sides of the stand 120 may include a flat surface extending upwardly from a predetermined position of the bottom surface 121 with a different angle with respect to the bottom surface 121. For example, according to an embodiment of the disclosure, one support surface 122a of both support surfaces 122a and 122b may include an inclined surface extending upwards from one longer edge of the bottom surface 121 of a rectangular shape at a certain acute angle with respect to the bottom surface 121, as shown in FIGS. 1A and 1B. Similarly, according to an embodiment of the disclosure, the other support surface 122b of both support surfaces 122a and 122b may include a vertical plane extending upwards from the other longer edge of the bottom surface 121 of a rectangular shape perpendicularly to the bottom surface 121. Although not explicitly specified in the drawings, according to an embodiment of the disclosure, the stand 120 may further include a mechanical configuration that can be coupled to the display module 110 on each of both sides of the support surfaces 122a and 122b.

Referring to FIGS. 1A, 1B and 1C, the bottom surface 121 and both of the support surfaces 122a and 122b of the stand 120 are shown as forming a recumbent right-angled triangular prism shape, but the present disclosure is not limited thereto. Further, FIGS. 1A, 1B and 1C illustrate that the stand 120 has two support surfaces 122a and 122b, but the present disclosure is not limited thereto. According to another embodiment of the disclosure, the stand 120 may have various different shapes capable of providing one or more support surfaces for the display module 110.

According to an embodiment of the disclosure, the stand 120 may include a protrusion 123 in front of the support surface 122b perpendicular to the bottom surface 121. The protrusion 123 may serve as a safety means against overturning of the display module 110 due to its own load, when the display module 110 is coupled to the support surface 122b to be vertically arranged on the stand 120 in use.

According to an embodiment of the disclosure, the display module 110 may be coupled to either one of the support surfaces 122a and 122b on both sides of the stand 120 depending on a user's intended purpose. According to an embodiment of the disclosure, as shown in FIGS. 1A to 1C, the support surfaces 122a and 122b on both sides of the stand 120 may be configure to have different angles with respect to the bottom surface 121. In this case, according to which of the support surfaces is coupled to and support the display module 110, the display module 110 may be used in a respective different arrangement where the display module is tilted at a respective different angle from a viewing direction. For example, in FIGS. 1A and 1B is shown an arrangement in which the display module 110 is supported by the vertical support surface 122b and is vertically disposed with respect to the viewing direction in use. Further, in FIG. 1C is shown an arrangement in which the display module 110 is supported by the inclined support surface 122a and is obliquely disposed with respect to the viewing direction. Further, according to an embodiment of the disclosure, the display module 110 may be used pivotally rotated in various angles to suit the purpose of use, while it is supported by each of the supporting surfaces 122a and 122b. For example, FIG. 1A illustrates that the display module 110 is supported by the vertical support surface 122b and used in landscape mode, and FIG. 1B illustrates that the display module 110 is pivotally rotated from that of FIG. 1A and used in portrait mode.

According to an embodiment of the disclosure, as shown above, the stand 120 may include a power plug 124 connected via cable. The stand 120 may be configured to receive an external input power through the power plug 124. According to an embodiment of the disclosure, the power plug 124 may receive, for example, a common AC power from an electric outlet installed on a wall of a house. According to an embodiment of the disclosure, the power plug 124 may receive DC/AC power from various DC/AC current sources. According to one embodiment of the present disclosure, the stand 120 may operate to receive the power through the power plug 124 or in various other ways and supply the received power to the display module 110 in a wireless manner (e.g., in any of various ways using no power cable, inclusive of e.g., a non-contact wireless way or a way through contact between electrodes). Although not explicitly shown in the drawings disclosed herein, the stand 120 may further include a structure for power transmission to the display module 110 either inside or outside thereof.

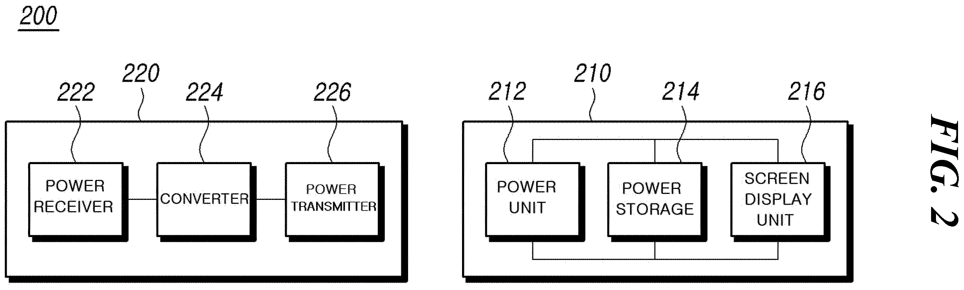

FIG. 2 is a block diagram schematically illustrating a functional configuration of a display system 200 according to an embodiment of the disclosure. As shown in FIG. 2, the display system 200 may include a display module 210 (e.g., the display module 110 of FIG. 1) and a stand 220 (e.g., the stand 120 of FIG. 1). According to various embodiments of the disclosure, the display module 210 may include a power unit 212, a power storage 214, and a screen display unit 216, as shown in FIG. 2. According to various embodiments of the disclosure, the stand 220 may include a power receiver 222, a converter 224, and a power transmitter 226.

According to an embodiment of the disclosure, the power receiver 222 may receive input power coming into the stand 220, for example, through the power plug 124 of FIG. 1 (not shown in FIG. 2), but the present disclosure is not limited thereto. According to an embodiment of the disclosure, the input power may be a common AC power or any input power received from various other types of DC/AC current sources. According to an embodiment of the disclosure, the power receiver 222 may, for example, receive an AC power and/or generate a predetermined DC voltage power through appropriate rectification, power factor compensation, and/or transformation processes as required. According to an embodiment of the disclosure, the power receiver 222 may receive a predetermined DC voltage power from an external adapter.

According to an embodiment of the disclosure, the converter 224 may convert the DC voltage power from the power receiver 222 into a predetermined high-frequency AC voltage power for wireless power transmission. For example, according to an embodiment of the disclosure, when the power transmitter 226 is configured to have a transmission (TX) resonator and perform a wireless power transmission via a magnetic induction by magnetic field generation, the converter 224 can generate a high frequency AC voltage power at a predetermined operating frequency corresponding to a resonant frequency of the transmission (TX) resonator. According to another embodiment of the disclosure, the converter 224 may convert the DC voltage power from the power receiver 222 into a predetermined DC voltage power, and the present disclosure is not limited to such a specific form.

According to an embodiment of the disclosure, the power transmitter 226 may include a configuration capable of transmitting power to the display module 220 in a wireless manner. For example, according to an embodiment of the disclosure, the power transmitter 226 may include a transmission (TX) resonator (not shown) configured to generate a magnetic field oscillating at a predetermined frequency based on an AC voltage signal applied from the converter 224. According to an embodiment of the disclosure, the power transmitter 226 may include a transmission (TX) resonator configured to generate a magnetic field of the same shape and size in a direction toward each of the support surfaces of the stand 220 (e.g., in a direction toward the support surface 122a and another direction toward the support surface 122b in FIG. 1) to transmit power toward each support surface, and a switch configured to select one of the support surfaces to which the power is transmitted, but the present disclosure is not limited thereto. According to another embodiment of the disclosure, the power transmitter 226 may include one or more contact electrodes (not shown) capable of providing a predetermined DC voltage power to the outside, that is, to the display module 210 by a point contact mode. In the present disclosure, the description is mainly focused on the circumstance in which the power transmitter 226 performs a wireless power transmission through magnetic induction or a power transmission via electrodes contact, but the present disclosure is not limited thereto. According to various embodiments of the disclosure, the power transmitter 226 may be configured to supply power to the display module 210 according to any type of wireless power transmission method.

According to various embodiments of the disclosure, the power unit 212 of the display module 210 may receive power supplied in a wireless manner from the power transmitter 226. According to an embodiment of the disclosure, the power unit 212 may include a reception (RX) resonator (not shown) capable of receiving the power wirelessly through resonance with the transmission (TX) resonator of the power transmission unit 226. According to an embodiment of the disclosure, when the reception (RX) resonator of the power unit 212 is configured to receive power wirelessly, the power unit 212 can operate to, for example, rectify the received AC voltage power to generate a predetermined DC voltage power. Further, according to another embodiment of the disclosure, the power unit 212 may include a contact electrode (not shown) capable of receiving a predetermined DC power through contact with the contact electrode of the power transmitter 226, and the present disclosure is not limited to such a specific type of power unit.

According to various embodiments of the disclosure, the power storage 214 may include one or more power storage elements (not shown). According to various embodiments of the disclosure, although not specifically illustrated herein, the power storage 214 may include a charging current path and a discharging current path for the power storage element. According to various embodiments of the disclosure, when the power unit 212 receives power from the outside, for example, the power transmitter 226 of the stand 220, the current applied from the power unit 212 via the charging current path can charge the power storage element (not shown) of the power storage 214. According to various embodiments of the disclosure, the power storage element may be an element capable of storing a relatively small amount of electric power, such as a capacitor or a super capacitor, and may be distinguished from a charge/discharge battery system that requires a separate charge/discharge control circuit. According to various embodiments of the disclosure, for example, when the display module 210 is decoupled or detached from the stand 220 so that the power unit 212 receives no more power from the power transmitter 226, a current from the power storage element of the power storage 214 may be supplied to the screen display unit 216 of the display module 210, through the discharge current path.

According to various embodiments of the disclosure, the screen display unit 216 may include a plurality of light emitting devices (not shown) and a driving control unit. According to various embodiments of the disclosure, the screen display unit 216 operates to obtain and store image information to be displayed on the screen using a predetermined scheme, and controls the light emission and luminance of each light emitting device based on the image information, thereby displaying a screen corresponding to the image information. According to various embodiments of the disclosure, the screen display unit 216 may receive a driving current from the power unit 212 or the power storage 214. According to various embodiments of the disclosure, for example, when the voltage of the driving current applied to the screen display unit 216 decreases (e.g., when the display module 210 is detached from the support surface of the stand 220 and thereby, the external power supply is reduced or stopped), the screen display unit 216 may operate to reduce the luminance of or turn OFF all or some of the plurality of light emitting devices, while maintaining a stored state of the image information for screen display. According to various embodiments of the disclosure, when the voltage of the driving current applied to the screen display unit 216 increases back again (e.g., when the display module 210 is disposed back again at a position on the support surface of the stand 220 so that the power supply is resumed), the screen display unit 216 can restore the luminance of the light emitting device based on the stored image information without restarting-up the display module 210, thereby leading to quickly restoring the screen display.

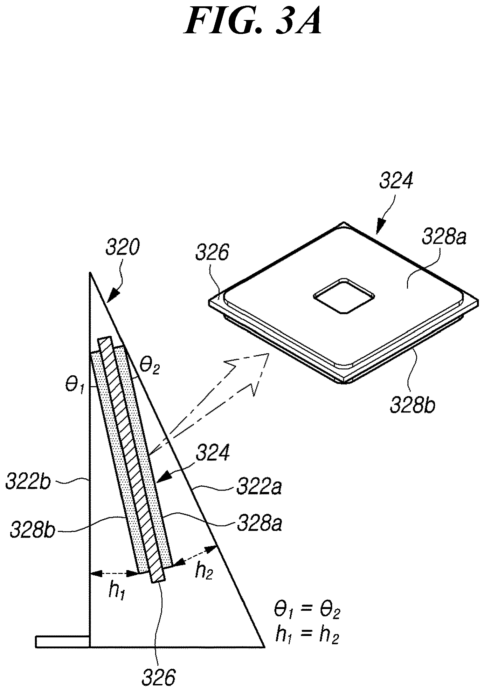

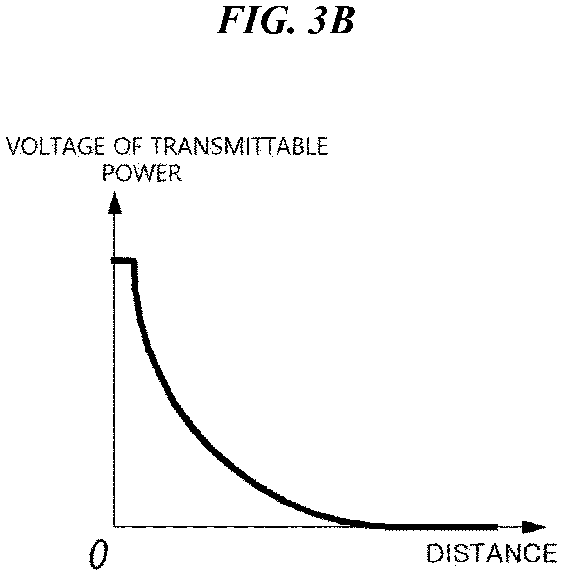

Referring then to FIGS. 3 to 8, the configuration and operation of the display system 300, which may correspond to the display system 100 of FIG. 1, according to an embodiment of the disclosure will be described. The display system 300 may include a stand 320 and a display module 310.

First, FIG. 3A is a diagram schematically showing a cross-section of the stand 320 having a power transmission (TX) resonator according to an embodiment of the disclosure, and FIG. 3B is a diagram conceptually illustrating a change in voltage that can be received by a reception (RX) resonator of the display module 310 depending upon a distance spaced apart from the stand 320 shown in FIG. 3A.

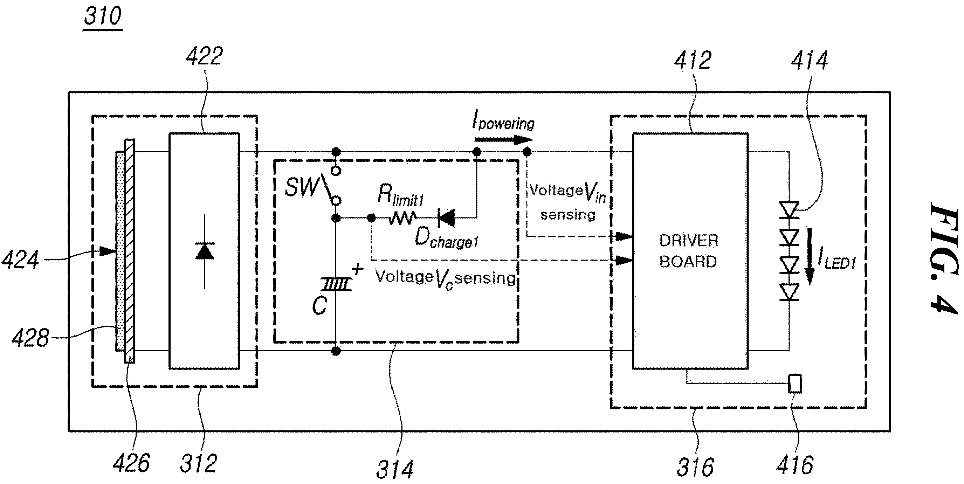

According to an embodiment of the disclosure, as shown in FIG. 3A, the power transmission (TX) resonator 324 may be disposed in an inner space between the support surfaces 322a and 322b on both sides of the stand 320. According to an embodiment of the disclosure, the transmission (TX) resonator 324 may be configured to form a resonant converter circuit with the reception (RX) resonator 424 of the display module 310, which will be further described later with reference to FIG. 4, thereby operating to wirelessly transmit power to the reception (RX) resonator 424 through a magnetic induction.

According to an embodiment of the disclosure, the transmission (TX) resonator 324 may include a core 326, and windings 328a and 328b disposed on both sides of the core 326. According to an embodiment of the disclosure, the windings 328a and 328b may have a coil formed with a copper wire wound, but the present disclosure is not limited thereto.

According to an embodiment of the disclosure, as shown in FIG. 3A, in the transmission (TX) resonator 324, the windings 328a and 328b may respectively by positioned on each side of the core 326 to face either side of the support surfaces 322a and 322b of the stand 320, respectively. According to an embodiment of the disclosure, each of the windings 328a and 328b may be arranged to have the same angle (e.g., $\Theta_1 = \Theta_2$) and the same distance (e.g., $h_1 = h_2$) with respect to the respective opposing support surfaces 322a and 322b. With this arrangement, the transmission (TX) resonator 324 may generate a magnetic field of the same resonant inductance (or leakage inductance) for both the support surfaces 322a and 322b, and provide a consistent power transmission for the display module 310 supported by any of the support surfaces 322a and 322b.

Referring to FIG. 3A, it is illustrated that only the transmission (TX) resonator 324 is disposed in the inner space of the stand 320, but this is only to help the understanding of the disclosure. According to various embodiments of the disclosure, as described above with reference to FIGS. 1 and 2, the stand 320 may include various configurations for receiving power (e.g., common AC power) from the outside and then converting the received power appropriately, thereby enabling proximity wireless power transmission (e.g., a wireless power transmission based on magnetic induction) to the display module 310 through the transmission (TX) resonator 324.

According to an embodiment of the disclosure, the display module 310 coupled to and supported on either one of the support surfaces 322a and 322b of the stand 320 may be detached from the corresponding support surface and then rearranged. For example, the display module 310 being coupled to the support surface 322b of the stand 320 in a landscape mode as shown in FIG. 1A may be rearranged to pivot into a portrait mode as shown in FIG. 1B or may be rearranged to be supported by another support surface 322a as shown in FIG. 1C. In such circumstances, the display module 310 may be moved more than a predetermined distance away from the support surface 322b and the transmission (TX) resonator 324 inside the stand 320 during occurrence of rearrangement.

FIG. 3B conceptually illustrates a change in voltage of power that can be transmitted from the stand 320 to the display module 310, as the distance of the display module 310 from the stand 320 (or the transmission (TX) resonator 324 of the stand 320) changes. As shown, it can be seen that the voltage of the transmittable power is inversely proportional to an increase in the distance, when the distance of the display module 310 from the transmission (TX) resonator 324 is out of a predetermined range.

FIG. 4 is a diagram illustrating an exemplary circuit configuration of the display module 310 corresponding to the stand 320 of FIG. 3A, according to an embodiment of the disclosure. As illustrated, the display module 310 may include a power unit 312, a power storage 314, and a screen display unit 316.

Referring to FIG. 4, the power unit 312 may include a reception (RX) resonator 424 and a rectifying section 422. According to an embodiment of the disclosure, the reception (RX) resonator 424 may be configured to, for example, form a resonant circuit with the transmission (TX) resonator 324 of the stand 320 described in connection with FIG. 3A, and it may receive power wirelessly through magnetic induction. According to an embodiment of the disclosure, the reception (RX) resonator 424 may include a core 426 and a winding 428 disposed out of the core. According to an embodiment of the disclosure, the rectifying section 422 may rectify the power of the AC voltage received by the reception (RX) resonator 424 to convert it into the power of the DC voltage.

According to an embodiment of the disclosure, the power storage 314 may be connected to the power unit 312 in parallel with the screen display unit 316, as shown in FIG. 4. According to an embodiment of the disclosure, the power storage 314 may include power storage elements, for example, a capacitor C, a charging diode $D_{charge1}$ transferring the current from the power unit 312 to the capacitor C, and a resistor Riimiti connected between the capacitor C and the charging diode $D_{charge1}$. The capacitor C may cause rush incurrent to flow into the circuit, so the resistor $R_{limit1}$ is disposed to prevent damage to the circuit due to such rush current. According to an embodiment of the disclosure, the power storage 314 may further include a switch SW connected to a point between the capacitor C and the resistor $R_{limit1}$, the switch providing a discharging path for the current discharged from the capacitor C.

According to an embodiment of the disclosure, as shown in FIG. 4, the screen display unit 316 may be connected to the power unit 312. According to an embodiment of the disclosure, the screen display unit 316 may include a driver board 412, a light emitting unit 414, and an alarm unit 416.

According to an embodiment of the disclosure, the driver board 412 is configured to control overall operations of the light emitting unit 414 and the alarm unit 416. According to an embodiment of the disclosure, the driver board 412 may receive a current applied from the power unit 312 or a current discharged from the capacitor C, and provide an operating current to the light emitting unit 414 and the alarm unit 416. According to an embodiment of the disclosure, the driver board 412 is configured to store, for example, broadcasting or other various image information received or acquired from the outside in a wired or wireless manner, and based on the image information, control the light emission and luminance of each light emitting device of the light emitting unit 414 (e.g., the operating current $I_{LED1}$ for the light emitting unit 414 ), so as to display visual information, video or images on a display screen. According to an embodiment of the disclosure, the driver board 412 is configured to obtain measurements of a voltage $V_c$ of the capacitor C and a voltage $V_{in}$ of a driving current $I_{powering}$ applied to the driver board 412, and based on those voltage measurements, control each light emitting device of the light emitting unit 414 to operate in a power saving mode or an ultra-power saving mode.

According to an embodiment of the disclosure, the light emitting unit 414 may include a plurality of light emitting devices connected in series, for example, a plurality of light emitting diodes. Although it is illustrated in FIG. 4 that the light emitting unit 414 includes one row of light emitting diodes connected in series, the present disclosure is not limited thereto. According to various embodiments of the disclosure, the light emitting unit 414 may include an array of various numbers of light emitting devices connected in various ways as required.

According to an embodiment of the disclosure, FIG. 4 illustrates that the alarm unit 416 includes one lamp as shown therein, but the present disclosure is not limited thereto. According to some embodiments of the present disclosure, the alarm unit 416 may include various elements or devices to provide a visual and/or audible alarm indicating that the light emitting unit 414 is operating in the power saving mode or ultra-power saving mode. According to some embodiments of the present disclosure, the alarm unit 416 may include, for example, one or more lamps or beepers. Further, according to another embodiment of the disclosure, some of the light emitting elements constituting a part of the light emitting unit 414 (e.g., one or some of the plurality of light emitting diodes) may function as the alarm unit 416, in place of a separate additional audio/visual indicating element. In this case, when the light emitting unit 414 is operating in the power saving mode or ultra-power saving mode, such an operating state of the display module 310 may be displayed via at least a portion of the display screen corresponding to the light emitting devices functioning as the alarm unit 416.

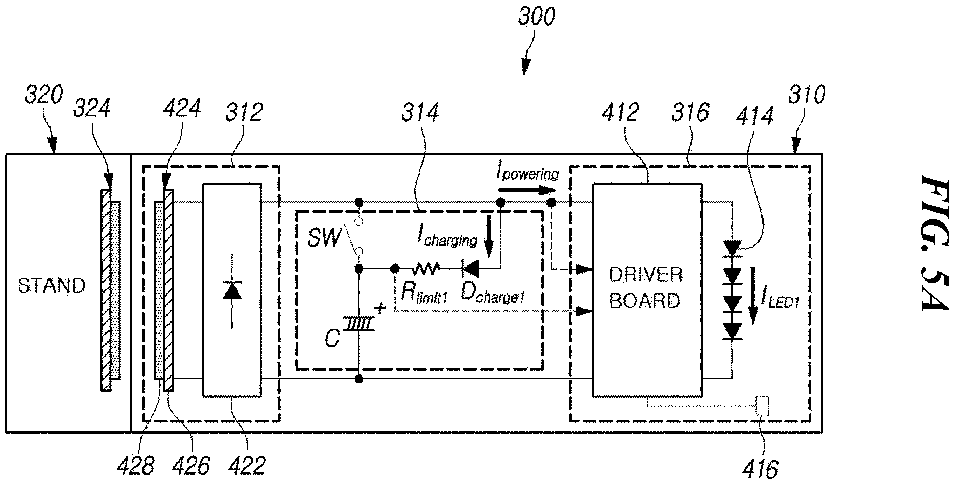

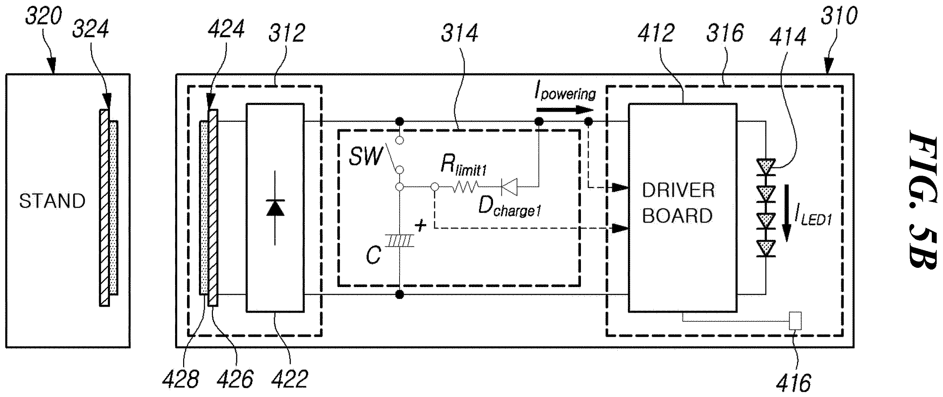

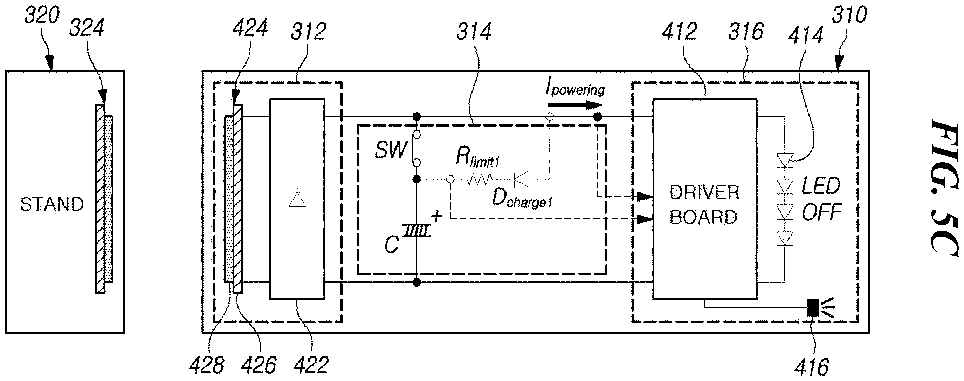

FIGS. 5A, 5B and 5C are schematic circuit diagrams respectively showing a current flow generated in the display module 310 and an operating state of the light emitting unit 414, depending upon a relative position between the display module 310 and the stand 320 according to an embodiment of the disclosure. More specifically, according to an embodiment of the disclosure, FIG. 5A is a circuit diagram showing an initial current flow in the display module 310 and an operating state of the light emitting unit 414, immediately after the display module 310 is coupled and disposed on the support surface of the stand 320, that is, immediately after the reception (RX) resonator 424 of the power unit 312 is disposed in a proper position on the support surface that can receive a sufficient amount of power from the transmission (TX) resonator 324 of the stand 320. According to an embodiment of the disclosure, FIG. 5B is a circuit diagram showing the current flow within the display module 310 and the operating state of the light emitting unit 414, in case where the display module 310 starts to detach from the original position in contact with the support surface of the stand 320 as shown in FIG. 5A so that the amount of power supplied from the transmission (TX) resonator 324 of the stand 320 to the reception (RX) resonator 424 of the power unit 312 begins to decrease. Further, according to an embodiment of the disclosure, FIG. 5C is a circuit diagram showing the current flow of within the display module 310 and the operating state of the light emitting unit 414, after the display module 310 is moved farther away from the support surface of the stand 320 than in FIG. 5B so that the amount of power supplied from the transmission (TX) resonator 324 of the stand 320 to the reception (RX) resonator 424 of the power unit 312 drops below a predetermined level (e.g., zero). Although FIGS. 5A to 5C illustrate that the stand 320 has a rectangular shape, this is only for convenience of illustration.

In order to help the reader's better understanding, in each of FIGS. 5A to 5C, only a portion of the circuit in the display module 310 through which current flows is indicated by a bold black line, and a remaining portion in which no current flows is indicated in gray. Further, in each of FIGS. 5A to 5C, the contrast of the light emitting unit 414 is shown differently depending on an amount of the current $I_{LED1}$ flowing through the light emitting unit 414 for each circumstance (the more current flowing through the light emitting unit 414, the darker bold arrow being displayed, while the less current flowing therethrough, the thinner gray arrow being displayed).

Specifically, referring then to FIG. 5A, when the display module 310 may be coupled to the support surface of the stand 320 and disposed in place, an induced current in the reception (RX) resonator 424 of the display module 310 due to resonance with the transmission (TX) resonator 324 of the stand 320 may flow through the rectifying section 422 to the power storage 314 and the screen display unit 316. For example, the charging current $I_{charging}$ from the rectifying section 422 of the power unit 312 may flow through the charging diode $D_{charge1}$ and the resistor Riimiti of the power storage 314 to the capacitor C to charge the capacitor C.

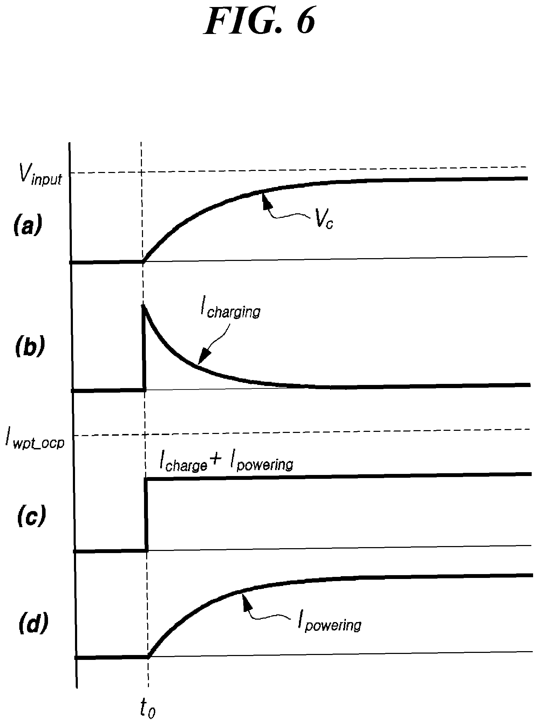

In this regard, FIG. 6 shows changes in voltage and current at each part of the display module 310 over time, in the case of FIG. 5A where the display module 310 of FIG. 4 is coupled to the support surface of the stand 320 and disposed in place. FIG. 6(a) shows that after the display module 310 is positioned in place on the support surface of the stand 320 at a timing point $t_0$, the capacitor voltage $V_c$ gradually increases to approach the input voltage $V_{input}$ from the power unit 312, as the charging current $I_{charging}$ from the rectifying section 422 of the power unit 312 flows through the charging diode $D_{charge1}$ and the resistor Riimiti of the power storage 314 so as to charge the capacitor C. In this regard, the charging current $I_{charging}$ flowing through the power storage 314 may be determined according to the following equation. FIG. 6(b) shows that the charging current $I_{charging}$ decreases as $V_c$ increases as in FIG. 6(a).

$$I_{charging} = \frac{V_{input} - V_c - V_F}{R_{limit1}}$$

According to an embodiment of the disclosure, a sum of the charging current $I_{charging}$ flowing into the capacitor C through the charging diode $D_{charge1}$ and the resistor $R_{limit1}$ of the power storage 314 and the driving current $I_{powering}$ flowing into the driver board 412 may be a constant value determined depending on a wireless transmission power transmitted/received between the transmission (TX) resonator 324 and the reception (RX) resonator 424. FIG. 6(c) shows that the sum of the charging current $I_{charging}$ and the driving current $I_{powering}$ is controlled to a certain constant value below a rated current value $I_{WPT\_OCP}$ of the wireless power transmission.

In the meantime, due to the resistor $R_{limit1}$ disposed to prevent possible damage to the circuit owing to inflow of rush current, a charging time of the capacitor C of the power storage 314 may lengthen. To deal with this problem of increased charging time in the driver board 412, a driving current $I_{powering}$ at initial charging stage may first be set to be a low value and then be gradually increased. For example, according to an embodiment of the disclosure, during the initial time of charging the capacitor C, the driver board 412 can control the luminance of the light emitting unit 414 (i.e., the current $I_{LED1}$ for the light emitting unit 414) to gradually increase the driving current $I_{powering}$ from the low value (refer to FIG. 6(d)). According to an embodiment of the disclosure, since the driver board 412 can obtain a measured value of a voltage $V_c$ across the capacitor C and a voltage drop $V_F$ across the charging diode $D_{charge1}$ is of a fixed value, a value of the charging current $I_{charging}$ can be obtained from the aforementioned equation. According to an embodiment of the disclosure, as the charging current $I_{charging}$ is decreasing, the driver board 412 can make an appropriate control of the driving current $I_{powering}$ so that the sum of the charging current $I_{charging}$ and the driving current $I_{powering}$ is to be a certain constant value.

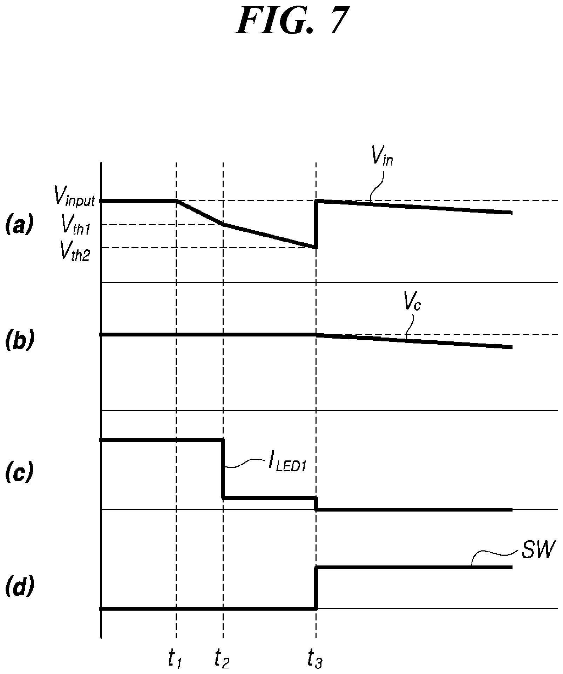

Referring then to FIG. 5B, the display module 310 is just starting to deviate from the original position on the support surface of the stand 320 to be slightly separated from the support surface. Referring then to FIG. 5C, the display module 310 is being farther away from the support surface of the stand 320 than in FIG. 5B. In this context, FIG. 7 shows changes in voltage and current at each part of the display module 310 and respective states of a switch SW over time during which the display module 310 gets detached from its original position on the support surface of the stand 320 and gradually moves away therefrom as shown in FIGS. 5B and 5C.

As shown in FIG. 5B, since the capacitor C is already in a fully charged state, and the current supplied through the electromagnetic induction between the transmission (TX) resonator 324 of the stand 320 and the reception (RX) resonator 424 of the display module 310 passing through the rectifying section 422 flows only toward the screen display unit 316. Here, as the display module 310 departs from the support surface of the stand 320 and thus the received voltage at the reception (TX) resonator 424 gradually decreases, the voltage $V_{in}$ of the driving current $I_{powering}$ flowing from the power unit 312 toward the screen display unit 316 may begin to gradually decrease. As described above, the screen display unit 316 can continuously measure the voltage $V_{in}$ of the received driving current $I_{powering}$. As the display module 310 begins to deviate from the support surface of the stand 320, the voltage $V_{in}$ of the driving current $I_{powering}$ measured by the screen display unit 316 gradually gets lower.

FIG. 7(a) shows a change in voltage $V_{in}$ measured by the screen display unit 316 over time during which the display module 310 moves away from the support surface of the stand 320. As illustrated in FIG. 7(a), the display module 310 begins to depart from the support surface of the stand 320 at time $t_1$, and then the voltage $V_{in}$ may sharply decrease until it reaches time $t_2$. According to an embodiment of the disclosure, the driver board 412 of the screen display unit 316 may compare the voltage $V_{in}$ with a threshold value $V_{th1}$, and then identify that the voltage $V_{in}$ falls below the threshold value $V_{th1}$ at time $t_2$. According to an embodiment of the disclosure, at this timing point $t_2$, the driver board 412 may enter a power saving mode to reduce power consumed by the screen display unit 316. According to an embodiment of the disclosure, when the driver board 412 enters the power saving mode, it can significantly reduce the luminance of the light emitting unit 414 to darken the screen. In FIG. 5B, the light emitting unit 414 is represented more dimly compared to that of FIG. 5A to indicate that its luminance is significantly lowered. In FIG. 7(c) is illustrated that the current $I_{LED1}$ for the light emitting unit 414 is greatly reduced from the timing point $t_2$. Further, FIG. 7(a) shows that the rate of decrease of the voltage $V_{in}$ is reduced compared to that before the timing point $t_2$, at which the power saving mode is started so that the luminance of the light emitting unit 414 is lowered.

Referring again to FIG. 7(a), it is shown that after the voltage $V_{in}$ falls below the threshold value $V_{th1}$ at a timing point $t_2$ as described above, the voltage $V_{in}$ falls to a new threshold value $V_{th2}$ which is lower than the threshold value $V_{th1}$ at a timing point $t_3$. As seen from FIG. 5C, this is because the display module 310 is further spaced apart from the support surface of the stand 320 and thus, the reception voltage of the reception (TX) resonator 424 got lower than that of FIG. 5B. According to an embodiment of the disclosure, the driver board 412 may compare the voltage $V_{in}$ with the threshold value $V_{th2}$, and enter the ultra-power saving mode when the voltage $V_{in}$ reaches the threshold value $V_{th2}$ at a timing point $t_3$. According to an embodiment of the disclosure, when entering the ultra-power saving mode, the driver board 412 may turn OFF each light emitting device of the light emitting unit 414 while maintaining a turned-on state of the screen display unit 316 itself. According to various embodiments of the disclosure, even if each light emitting device of the light emitting unit 414 is turned OFF in the ultra-power saving mode, since the turned-on state of the screen display unit 316 is maintained, the storage state of image information for the screen display can be maintained. Thus, when the power supply is resumed and exits from the power saving mode and/or the ultra-power saving mode, the screen display unit 316 can quickly restore the screen display with the maintained image information without re-booting or re-starting up. In FIG. 5C, it is illustrated that the light emitting unit 414 is represented more dimly than that of FIG. 5B to indicate that each light emitting device thereof is turned OFF, and in FIG. 7(c), it is illustrated that the current $I_{LED1}$ for the light emitting unit 414 becomes almost zero from the timing point $t_3$. Meanwhile, according to an embodiment of the disclosure, as shown in FIG. 7(d), the switch SW may be controlled to be turned ON, from the time $t_3$ when the voltage $V_{in}$ drops to the threshold value $V_{th2}$ and the driver board 412 enters the ultra-power saving mode. When the switch SW is turned ON, a discharge current path of the power storage 314 may be activated, and the current charged in the capacitor C may be discharged to flow toward the driver board 412 of the screen display unit 316. In this circumstance, as shown in FIG. 7(a), the voltage $V_{in}$ of the driving current $I_{powering}$ for the driver board 412 may be temporarily increased again and then gradually lowered along with consumption of charging current of the capacitor C. In FIG. 7(b), it is also shown that the charging voltage $V_c$ of the capacitor C gradually decreases after the switch SW is turned ON at the timing point $t_3$.

In the meantime, according to an embodiment of the disclosure, when the driver board 412 enters the ultra-power saving mode and turns OFF each light emitting device of the light emitting unit 414 as shown in FIG. 5C, the alarm unit 416 may be turned ON under the control of the driver board 412. The alarm unit 416 may notify the user that the entirety of the display module 310 is not completely turned OFF, even though each light emitting device of the light emitting unit 414 is turned OFF. In FIG.

5C, the alarm unit 416 is illustrated as a separate lamp, but the present disclosure is not limited thereto. As described above, according to another embodiment of the disclosure, the alarm unit may include various audio/visual elements with one or more lamps or beepers. Alternatively, the alarm unit may be composed of some of the light emitting devices of the light emitting unit for the screen display (e.g., one or more light emitting diodes).

According to an embodiment of the disclosure, as described with reference to FIGS. 5A, 5B, 5C and 7, the system may enter the power saving mode and/or the ultra-power saving mode in a stepwise manner, while the amount of power input is temporarily reduced or stopped as the display module is moved away from the support surface of the stand. According to another embodiment of the disclosure, when the amount of the input power is temporarily reduced or stopped as the display module is moved away from the support surface of the stand, the display module may immediately enter the ultra-power saving mode to extremely limit the power consumption. According to various embodiments of the disclosure, the display module can reduce its power consumption to consume minimal power only for maintaining its turned-on state (e.g., maintaining the storage state of image information for the screen display) through the power saving mode and/or the ultra-power saving mode, thereby enabling securing a longer standby time up until the power supplying from the stand is normally resumed again.

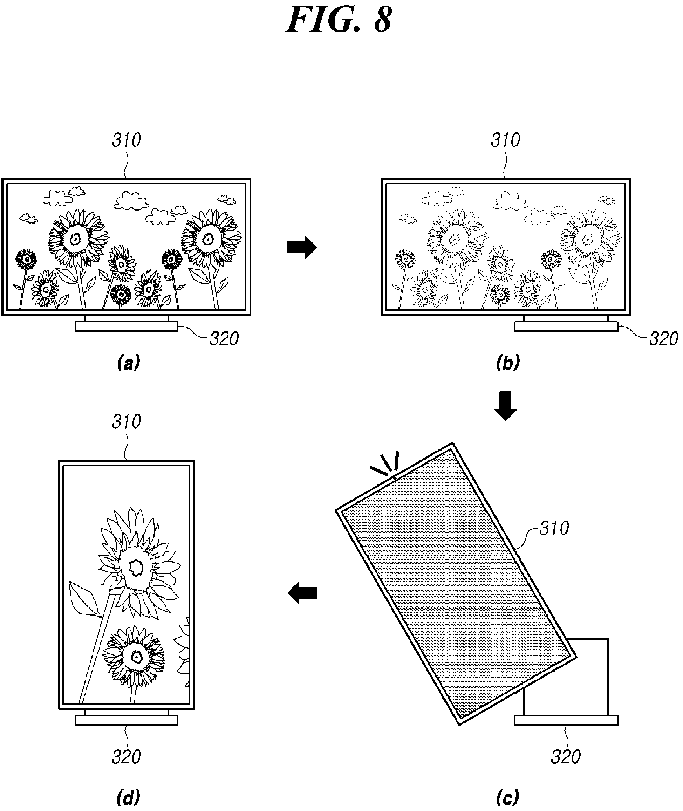

FIG. 8 is a diagram illustrating an example of use in which the display module 310 is pivoted and rearranged on the stand 320, according to an embodiment of the disclosure. According to an embodiment of the disclosure, a display state of a display screen on the display module 310 may change in two stages, that is, a power saving mode and an ultra-power saving mode, until the display module 310 is rearranged on the stand 320 after deviating from its original position, as shown in FIG. 5.

As shown in FIG. 8 at (a), the display module 310 is disposed in an original position on the stand 320 (e.g., a preferred placement position that can implement the maximum wireless power transmission) in landscape mode and displaying the screen. Specifically, although not shown herein, the power unit 312 of the display module 310 may be receiving a sufficient amount of power from the stand 320 in a wireless manner. Further, although not shown, the power supplied from the stand 320 may be stored in the power storage 314 of the display module 310.

Then, in FIG. 8 at (b), it is shown an initial moving situation at which the display module 310 starts to move away from its original position with respect to the stand 320. As illustrated, it can be seen that the display module 310 enters the power saving mode, maintaining the display state of the screen, but the overall luminance of the screen gets lowered (or dimmed).

Now, as shown in FIG. 8 at (c), the display module 310 moved further away from the stand 320 and the display module 310 has entered the ultra-power saving mode. As shown, the entire screen has been turned OFF. Even though the entire screen has been turned OFF, a lamp of the alarm unit 416 of the display module 310 is turned ON to indicate that the display module 310 is not completely turned OFF, but is in the ultra-power saving mode.

In FIG. 8 at (d), it is illustrated that the display module 310 has been completely pivoted from the landscape mode to the portrait mode and rearranged in the proper position on the stand 320. As illustrated, the screen display may exit from the power saving mode and/or the ultra-power saving mode to restore back the luminance state in its normal operation. According to various embodiments of the disclosure, during transitioning from FIG. 8(c) to FIG. 8(d), the display module 310 may immediately restore the screen display illumination state without any restarting up process. Although not shown herein, the power unit 312 of the display module 310 at FIG. 8(d) may be receiving a sufficient amount of power from the stand 320 in a wireless manner again. Further, although not shown herein, the power storage 314 of the display module 310 may be charged again by the power supplied from the stand 320.

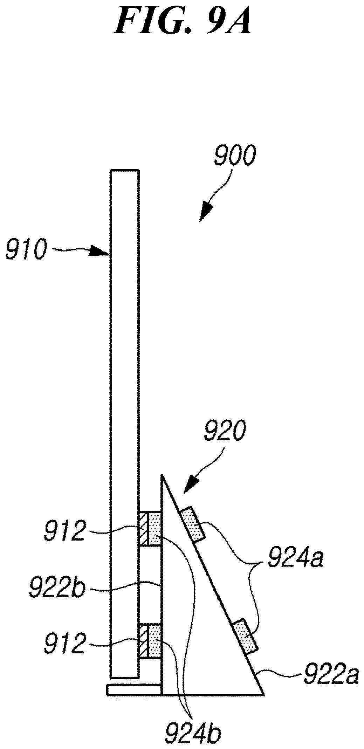

Hereinafter, referring to FIGS. 9A, 9B, 10, 11A, 11B, and 12, description is made to the configuration and operation of a display system 900 (e.g., the display system 100 or 200 of FIGS. 1 and 2) according to another embodiment of the disclosure. The display system 900 may include a stand 920 and a display module 910.

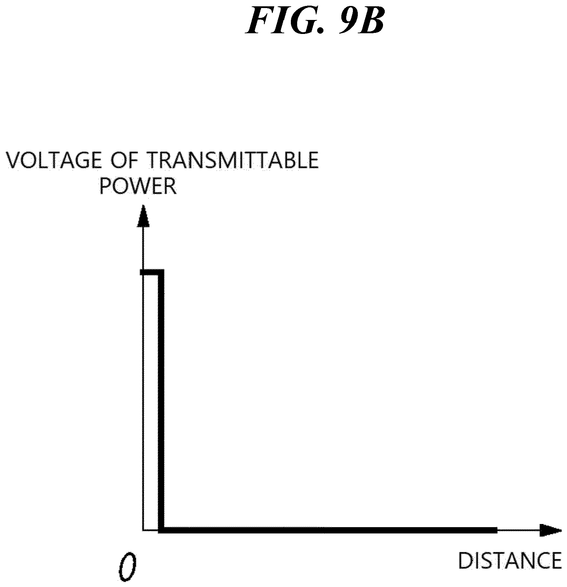

First, FIG. 9A is a side view schematically illustrating the stand 920 and the display module 910 coupled to the stand 920, according to an embodiment of the disclosure, and then, FIG. 9B is a graph conceptually illustrating a change in voltage in the display module 920 depending upon a distance from the stand 920 illustrated in FIG. 9A.

According to an embodiment of the disclosure, as shown in FIG. 9A, each of the support surfaces 922a and 922b on both sides of the stand 920 may be provided with a pair of transmitting electrodes 924a and 924b for transmitting power to the display module 910 in a wireless manner. Further, according to an embodiment of the disclosure, as shown in FIG. 9A, a pair of receiving electrodes 912 for receiving the power in contact with the transmitting electrodes 924a and 924b of the stand 920 may be provided on the back side of the display module 910. According to an embodiment of the disclosure, the receiving electrodes 912 of the display module 910 may be respectively disposed to come into contact with the transmitting electrodes 924a on the support surface 922a to receive the power from the stand 920. The receiving electrodes 912 of the display module 910 may be arranged to come into respectively contact with the transmitting electrodes 924b on the support surface 922b to receive the power from the stand 920, as shown in FIG. 9A. In FIG. 9A, each of the transmitting electrodes 924a and 924b disposed on each of the support surfaces 922a and 922b is illustrated to protrude from the corresponding support surface, but the present disclosure is not limited thereto. Further, although the receiving electrodes 912 of the display module 910 is illustrated in a shape of protruding from the back side of the display module 910, the present disclosure is not limited thereto. According to various embodiments of the disclosure, each of the transmitting electrodes provided in the stand and the receiving electrodes of the display module may have various shapes and arrangements enabling safe and efficient contacts and power transmissions.

As shown in FIG. 9A, in case where the display module 910 is configured to receive power from the stand 920 in a wireless manner through a physical contact between the electrodes of the stand 920 and the display module 910, the reception voltage level of the display module 910 may abruptly drop to zero, as shown in FIG. 9B, at the moment when the receiving electrodes 912 of the display module 910 are separated or decoupled from the transmitting electrodes 924a and 924b of the stand 920. This is because the power supply from the stand 920 to the display module 910 is cut off.

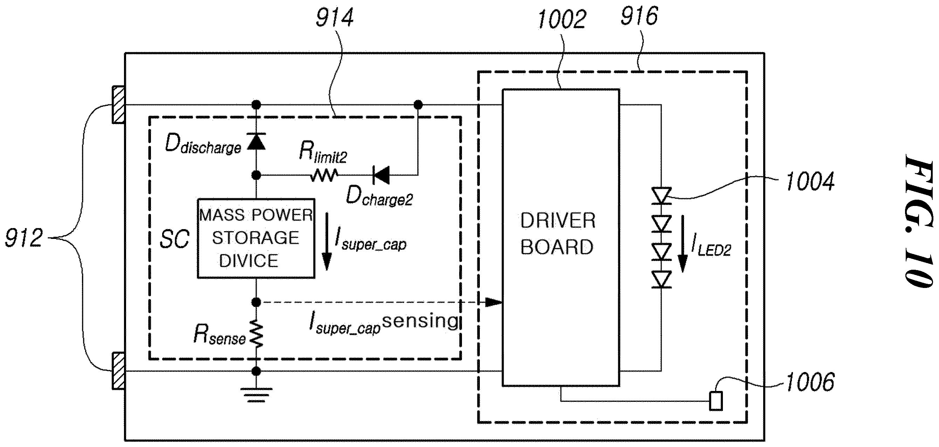

FIG. 10 is a diagram illustrating an exemplary circuit configuration of the display module 910 of FIG. 9A according to an embodiment of the disclosure. As illustrated, the display module 910 may include receiving electrodes 912, a power storage 914, and a screen display unit 916.

Referring to FIG. 10, the receiving electrodes 912 may receive power via the contact with the transmitting electrodes 924a or 924b of the stand 920 as described above with reference to FIG. 9A, for example. In the embodiment of the present disclosure where the display module 910 is configured to receive power through electrode contact, since a resonator circuit configuration for power transmission is not necessary, the display module 910 may be manufactured with a lower cost, compared to the display module 310 according to the embodiments described above with reference to FIGS. 3 to 8.

According to an embodiment of the disclosure, as shown in FIG. 10, the power storage 914 may be connected between the receiving electrodes 912 in parallel with the screen display unit 916. According to an embodiment of the disclosure, the power storage 914 may include a power storage element, for example, a mass power storage device SC (e.g., super capacitor), a charging diode $D_{charge2}$ delivering a charging current $I_{super\_cap}$ from one of the receiving electrodes 912 to the mass power storage device SC, and a resistor $R_{limit2}$ connected between the mass power storage device SC and the charging diode $D_{charge2}$. According to an embodiment of the disclosure, in the display module 910 configured to receive power with the electrode contact, as described above with reference to FIG. 9B, the power supply to the receiving electrodes 912 is immediately interrupted at the moment when the electrode contact is released, and thus, the mass power storage device SC can be used to reserve enough charging power to wait until the power is properly resumed back again.

Since the mass power storage device SC may cause inrush current to flow into the circuit, the resistor $R_{limit2}$ is disposed to prevent the circuit damage from the inrush current. According to an embodiment of the disclosure, as shown in FIG. 10, the power storage 914 may further include a sensing resistor $R_{sense}$ for measuring the current $I_{super\_cap}$ flowing in the mass power storage device SC. According to an embodiment of the disclosure, as shown in FIG. 10, the power storage 914 may include a discharge diode $D_{discharge}$ configured to be connected to a point between the mass power storage device SC and the resistor $R_{limit2}$ and provide a discharge current path for the current discharged from the mass power storage device SC. The power storage 914 according to the embodiment of the disclosure may adopt a discharge diode $D_{discharge}$ for the discharge current path, rather than a switch in the power storage 314 shown in FIGS. 3 and 4 so that the display module 910 may be manufacture at a relatively lower unit cost.

According to an embodiment of the disclosure, as shown in FIG. 10, the screen display unit 916 may be connected to the receiving electrodes 912. According to an embodiment of the disclosure, the screen display unit 916 may include a driver board 1002, a light emitting unit 1004, and an alarm unit 1006.

According to an embodiment of the disclosure, the driver board 1002 may control the overall operation of the light emitting unit 1004 and the alarm unit 1006. According to an embodiment of the disclosure, the driver board 1002 may receive the driving current $I_{powering2}$ applied from the receiving electrodes 912 or discharged from the mass power storage device SC. The driver board 1002 may provide an operating current for the light emitting unit 1004 and the alarm unit 1006. According to an embodiment of the disclosure, the driver board 1002 may store, for example, broadcasting or other various image information received or acquired from the outside in a wired or wireless manner, and based on the image information, control the light emission and luminance of each light emitting device of the light emitting unit 1004 (e.g., the operating current $I_{LED2}$ for the light emitting unit 1004), for displaying visual information, video or images on a screen. According to an embodiment of the disclosure, the driver board 1002 may sense the current $I_{super\_cap}$ on the power storage 914, and based on the sensed current $I_{super\_cap}$, control each light emitting device of the light emitting unit 1004 to operate in an ultra-power saving mode.

According to an embodiment of the disclosure, the light emitting unit 1004 may include a plurality of light emitting devices connected in series, for example, a plurality of light emitting diodes. Referring to FIG. 10, the light emitting unit 1004 is illustrated as having one row of light emitting diodes connected in series, but the present disclosure is not limited thereto. According to various embodiments of the disclosure, the light emitting unit 1004 may include an array or arrays of various numbers of light emitting devices connected in various ways.

As shown in FIG. 10, the alarm unit 1006 may include one lamp, but the present disclosure is not limited thereto. As described above with reference to FIG. 5, according to various embodiments of the disclosure, the alarm unit 1006 may include various elements or devices that provide a visual and/or audible alarm signal indicating that the light emitting unit 1004 is operating in the ultra-power saving mode.

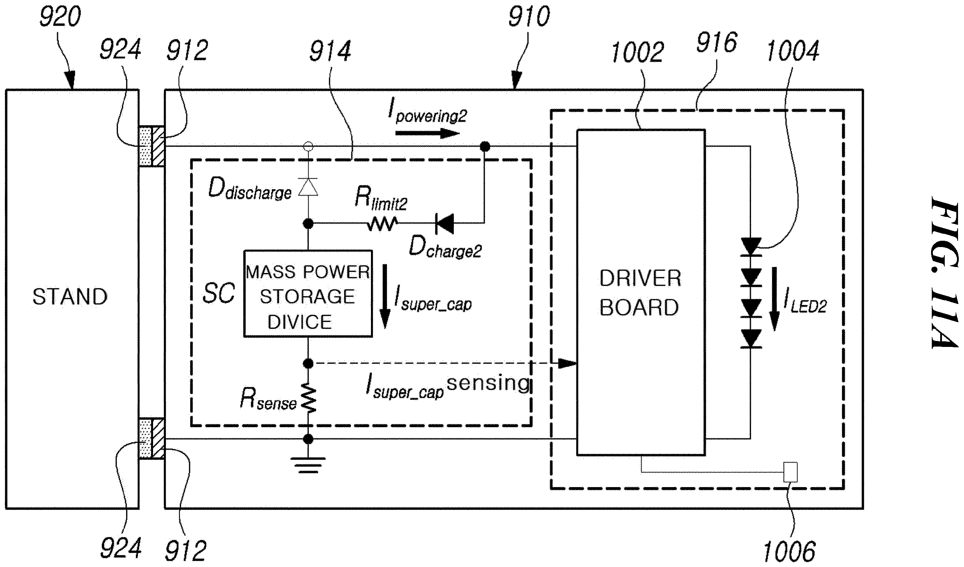

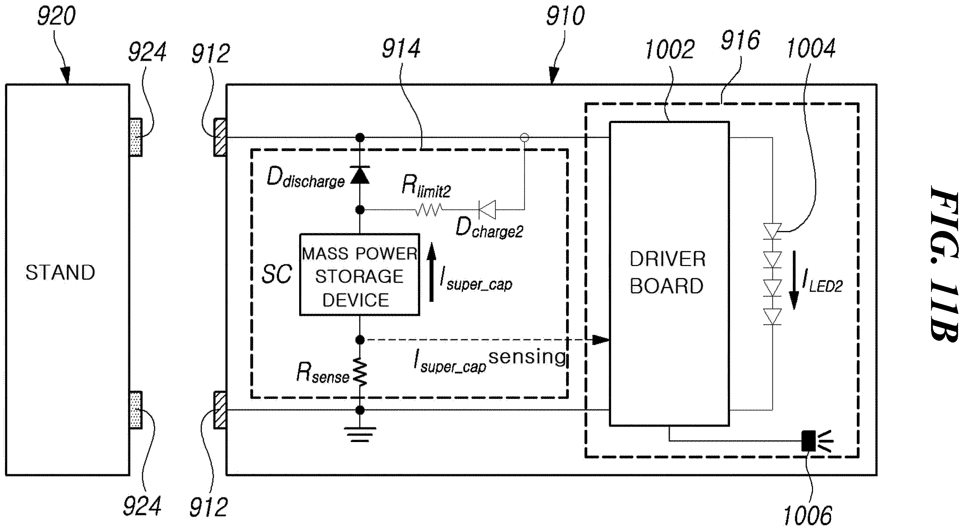

FIGS. 11A and 11B are diagrams respectively showing a current flow generated in the display module 910 and an operating status of the light emitting unit 1004, depending upon a relative position between the display module 910 and the stand 920 of FIG. 9, according to an embodiment of the disclosure. More specifically, FIG. 11A shows an initial current flow within the display module 910, when the display module 910 is coupled and disposed on the support surface of the stand 920 so that a sufficient amount of power is supplied from the transmitting electrodes 924 of the stand 920 to the receiving electrodes 912, according to an embodiment of the disclosure. Further, according to an embodiment of the disclosure, FIG. 11B shows the current flow within the display module 910 when the display module 910 is separated from the support surface of the stand 920 so that the receiving electrodes 912 are not supplied with the power from the transmitting electrodes 924 of the stand 920. As in the case of FIG. 5, in FIG. 11, the stand 920 is illustrated as having a rectangular shape, but this is only for convenience of illustration. As in the case of FIG. 5, it is noted in FIG. 11 that only a portion of the display module 910 through which the current flows is indicated by a bold black line, while a remaining portion through which no current flows is indicated dimly in gray. Likewise, it is noted in each of FIGS. 11A and 11B that the contrast of the light emitting unit 1004 is represented differently depending on whether the current $I_{LED2}$ flows in the light emitting unit 1004.

Referring to FIG. 11A, the display module 910 may be coupled to the support surface of the stand 920 to be disposed in place. A current may flow to the power storage 914 and the screen display unit 916 of the display module 910 through the contact of the receiving electrodes 912 of the display module 910 with the transmitting electrodes 924 of the stand 920. For example, the current $I_{super\_cap}$ from the receiving electrodes 912 may flow to the mass power storage device SC through the charging diode $D_{charge2}$ and the resistor $R_{limit2}$ of the power storage 914 and may charge the mass power storage device SC. Further, the driving current $I_{powering2}$ from the receiving electrodes 912 may flow to the driver board 1002. According to an embodiment of the disclosure, the driver board 1002 may receive the driving current $I_{powering2}$ and supply the current $I_{LED2}$ for the light emitting unit 1004.

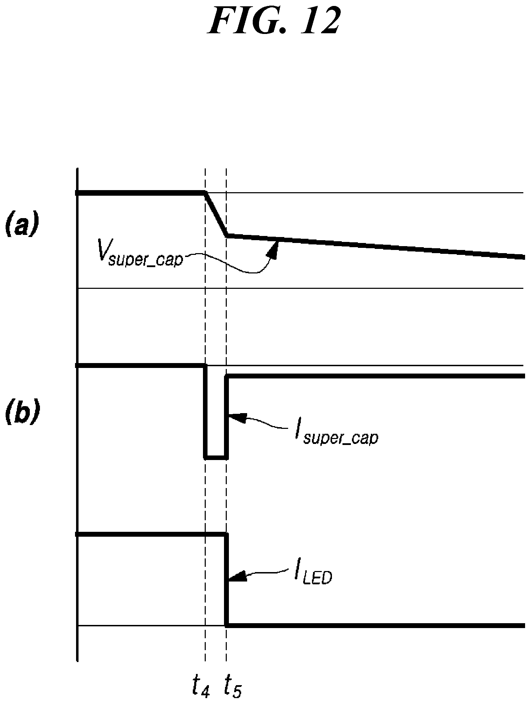

Then, referring to FIG. 11B, the receiving electrodes 912 of the display module 910 may be separated from the transmitting electrodes 924 on the support surface of the stand 920 so that no power is supplied from the stand 920. In this context, FIG. 12 shows changes in voltage and current at each part of the display module 910 when the power supply is cut off between the receiving electrodes 912 of the display module 910 and the transmitting electrodes 924 of the stand 920.

According to an embodiment of the disclosure, when the power supply from the transmitting electrodes 924 of the stand 920 to the receiving electrodes 912 of the display 910 is interrupted, the current stored in the mass power storage device SC may start to flow toward the driver board 1002 through the discharge diode $D_{discharge}$. In this connection, FIGS. 12A and 12B show that at a timing point $t_4$ when the receiving electrodes 912 are detached from the transmitting electrodes 924, a discharge current starts to flow from the mass power storage device SC to get a voltage $V_{super\_cap}$ of the mass power storage device SC sharply decrease so that the current $I_{super\_cap}$ flowing through the mass power storage device SC becomes relatively large negative current (that is, the current flow direction over the mass power storage device SC being reversed).

According to an embodiment of the disclosure, the driver board 1002 may detect the current $I_{super\_cap}$ flowing over the mass power storage device SC as described above, and thus, the driver board 920 may recognize that the current $I_{super\_cap}$ has become a negative current (that is, the current direction over the mass power storage device SC being changed), when the display module 910 is positioned away from the stand 920 and the current stored in the mass power storage device SC is caused to flow toward the driver board 1002 through the discharge diode $D_{discharge}$. According to an embodiment of the disclosure, when the driver board 1002 recognizes that the current $I_{super\_cap}$ has become a negative current, it enters the ultra-power saving mode and may turn OFF each light emitting device of the light emitting unit 1004 while keeping the turned-on state of the screen display unit 916. In FIG. 11B, the light emitting unit 1004 is represented dimly, compared to that of FIG. 11A, to indicate that the light emitting unit 1004 is in a turned-off state.

According to various embodiments of the disclosure, even if the light emitting unit 1004 is turned OFF in the ultra-power saving mode, the screen display unit 916 is maintained to be turned on. Thus, the stored image information for the screen display can be maintained. Therefore, when exiting from the ultra-power saving mode, the screen display unit 916 will be able to quickly restore the screen display using the maintained image information without rebooting or restarting up. As shown in FIG. 11B, the driver board 1002 may turn ON the alarm unit 1006 when it enters the ultra-power saving mode to turn OFF the light emitting unit 1004, thereby informing the user that not all the display module is turned OFF.

According to an embodiment of the disclosure, as shown in FIGS. 10 and 11, when the display module 910 is configured to receive power by an electrode contact, the power supply to the receiving electrodes 912 may be immediately disconnected as soon as the electrode contact is released as described above. Thus, when the power supply is disconnected, the display module 910 may directly enter the ultra-power saving mode to turn OFF the entire light emitting unit 1004, instead of entering the power saving mode and the ultra-power saving mode in a stepwise manner, so as to secure a relatively long waiting time until the power supply to the display module 910 is properly resumed back again, but the present disclosure is not limited thereto. According to another embodiment of the disclosure, even in the case of a display module configured to receive electric power with the electrode contact, for example, if the capacity of the mass power storage device SC is very large, the display module may first operate to reduce the luminance of the light emitting devices of the light emitting unit, instead of turning OFF the light emitting devices of the light emitting unit after the power supply from the stand is stopped, similarly to the power saving mode discussed in reference to FIG. 5B. According to another embodiment of the disclosure, even in the case of the display module configured to receive power with the electrode contact, the display module may operate to turn OFF only some of the light emitting devices of the light emitting unit, instead of turning OFF all the light emitting devices of the light emitting unit after the power supply from the stand to the display module is interrupted.

Meanwhile, as shown in FIGS. 12A and 12B, at a timing point $t_5$, a rate of decrease in the voltage $V_{super\_cap}$ in the mass power storage device SC is reduced and the current $I_{super\_cap}$ becomes relatively small negative current. This may result from the driver board 1002 entering the ultra-power saving mode at the timing point $t_5$ and turning OFF the light emitting unit 1004 as described above. In this context, FIG. 12C shows that the current $I_{LED2}$ for the light emitting unit 1004 becomes almost zero from the timing point $t_5$.

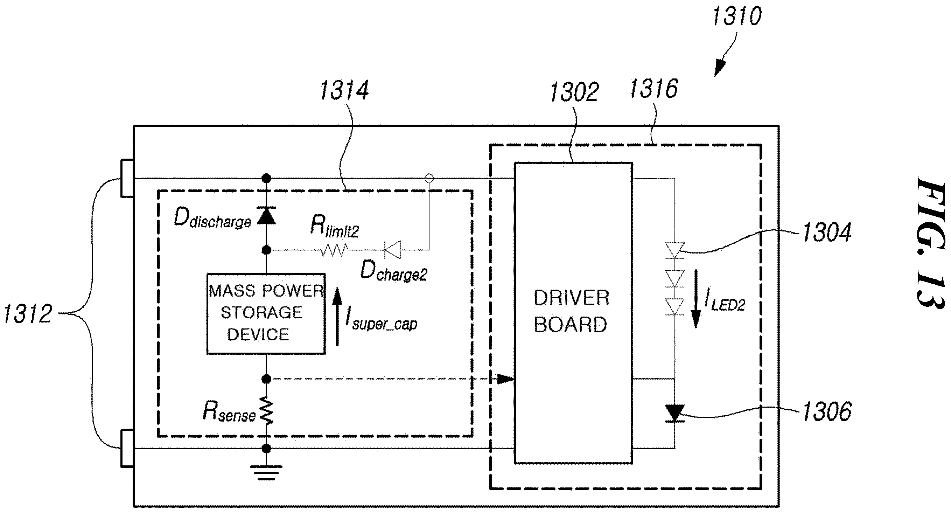

FIG. 13 is a diagram schematically illustrating a configuration of an exemplary display module 1310 in which a part of an internal circuit of the display module 910 shown in FIG. 11B is modified. Similar to the display module 910 shown in FIG. 11B, the display module 1310 shown in FIG. 13 may include receiving electrodes 1312, a power storage 1314, and a screen display unit 1316. Similar to that shown in FIG. 11B, the display module 1310 shown in FIG. 13 is in a state in which the power supply to the display module 1310 through the receiving electrodes 1312 is stopped.

Compared with the display module 910 of FIG. 11B, the display module 1310 of FIG. 13 is different in structure in that it may be configured to utilize at least one or more light emitting devices 1306 of the light emitting unit 1304 as an alarm unit, instead of having a separate alarm unit (e.g., a separate lamp). According to an embodiment of the disclosure, when the power supply through the receiving electrodes 1312 is interrupted, the display module 1310 may enter a power saving mode or an ultra-power saving mode to turn OFF the light emitting unit 1304 via the driving board 1302, while allowing the at least one or more of the light emitting devices partially constituting the light emitting unit 1304, for example, the light emitting device 1306, to maintain its turned ON state to operate as an alarm unit, as shown in FIG. 13. Although FIG. 13 illustrates that one light emitting device 1306 operates as the alarm unit, which maintains its light emitting state even in either the power saving mode or the ultra-power saving mode, this is only for convenience of illustration and description and the present disclosure is not limited thereto. According to another embodiment of the disclosure, when the display module enters the power saving mode or the ultra-power saving mode, the display module 1310 may be configured so that a greater number of light emitting devices of the light emitting unit 1304 may operate as an alarm unit to maintain the light emitting state. According to an embodiment of the disclosure, the display module 1310 may indicate, similar to the alarm unit 1006 in the display module 910 described above, to the user that the display module 1310 is currently maintaining its turned-on state, through one or more light emitting devices keeping their light emitting state.

According to an embodiment of the disclosure, as shown in FIG. 13, when the display module 1310 enters the power saving or the ultra-power saving mode to turn OFF the light emitting devices of the light emitting unit 1304 while maintaining the light emitting state (i.e., turned-on state) of some of light emitting devices 1306 predetermined to operate as an alarm unit, it may operate to display predetermined information through some of the light emitting devices 1306 maintaining the light emitting state. According to an embodiment of the disclosure, for example, the display module 1310 may display, via the light emitting devices 1306 configured to maintain their light emitting state even in either the power saving or the ultra-power saving mode, information of the maximum remaining time duration for which the display module 1310 is capable of maintaining its turned-on state before resuming of the power supply from the outside , but the present disclosure is not limited thereto.

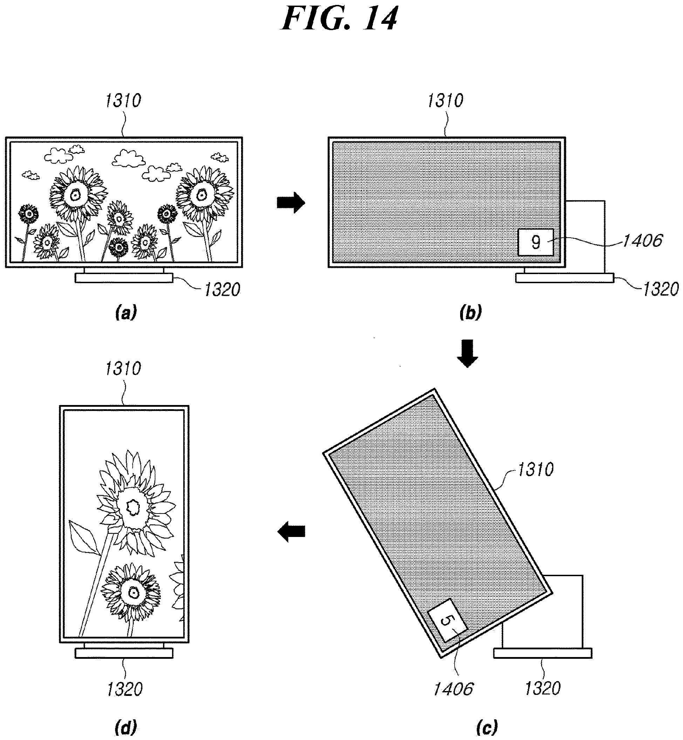

In this context, FIG. 14 shows an example of using the display module 1310 in which the display module 1310 is pivoted from its original position and re-positioned on the stand 132. Although not specifically illustrated, the stand 1320 may include transmitting electrodes capable of supplying power for the display module 1301 as shown in FIG. 9A.

As shown in (a) of FIG. 14, the display module 1310 is disposed on the stand 1320 in landscape mode to display a screen. Although not shown specifically, the display module 1310 may be receiving a sufficient amount of power from the stand 1320. Further, although not shown, the power supplied from the stand 1320 may be stored in the power storage 1314 of the display module 1310.

Then, as shown in (b) of FIG. 14, the display module 1310 starts to move away from its original position with respect to the stand 1320. As illustrated above, when the display module 1310 is separated from the stand 1320, it may immediately enter the ultra-power saving mode to turn OFF light emitting devices corresponding to most of the screen are turned OFF. However, as shown in (b) of FIG. 14, even though the display module 1310 enters the ultra-power saving mode to turn OFF those light emitting devices corresponding to most of the screen, some of light emitting devices corresponding to a designated part of the screen (e.g., a lowermost right section of the screen, corresponding to those light emitting devices 1306 predetermined to operate as an alarm unit to maintain the light emitting state even in ultra-power saving mode) may maintain their light emitting state, as described above referring to FIG. 13. According to an embodiment of the disclosure, as shown in (b) of FIG. 14, the display module 1310 may control the light emitting devices 1306 on a part of the screen portion 1406 to operate as an alarm unit to provide predetermined display information informing of the ultra-power saving mode. According to an embodiment of the disclosure, as shown in (b) of FIG. 14, the display module 1310 may display, in the lowermost right section 1406 of the screen, the maximum remaining standby time duration or count (for example, a number 9 in (b) of FIG. 14) during which the display module 1310 can maintain the turned-on state in the ultra-power saving mode without a resumption of power supply from the outside, but the present disclosure is not limited thereto.

Referring to (c) of FIG. 14, it is shown a situation in which the display module 1310 is pivotally rotated further away from the stand 1320 than that of FIG. 14 (b). In (c) of FIG. 14, the ultra-power saving mode is maintained and most of the light emitting devices on the screen are still turned OFF. In the lowermost right part 1406 of the screen, the updated maximum remaining standby time or count (e.g., the number 5 decreased than the number 9 in (b) of FIG. 14) during which the display module 1310 can maintain the turned-on state without a resumption of the power supply from the outside.

Referring then to (d) of FIG. 14, it is shown a state in which the display module 1310 has been completely pivoted from a landscape mode to a portrait mode and then re-positioned in place on the stand 1320. As shown in (d) of FIG. 14, the screen display is recovered from the ultra-power saving mode and restored to the original luminance state in the normal operation. Although not shown therein, the receiving electrodes 1312 of the display module 1310 may again receive electric power from the stand 1320 through the electrode contact. Further, although not shown herein, the power supplied from the stand 1320 may be stored again in the power storage 1314 of the display module 1310.

The terms used in the present disclosure are only used to describe specific embodiments and are not intended to limit the present disclosure thereto. For example, an element expressed in a singular form should be understood as a concept including a plurality of elements, unless the context explicitly means only the singular. It should be understood that the term 'and/or' as used in this disclosure encompasses any and all possible combinations by one or more of the enumerated items. As used in the present disclosure, the terms such as 'comprise', 'have', 'include' and so on are only intended to designate that the features, components, parts, or combinations thereof described in the present disclosure exist, and the use of these terms is not intended to exclude the possibility of the presence or addition of one or more other features, components, parts, or combinations thereof. Expressions such as 'first', 'second', and so on used in the present disclosure may modify various components regardless of order and/or importance, and are only used to distinguish one component from other components and not used to limit the corresponding components.

The expression 'configured to' as used in this disclosure may be interchangeably used with, for example, 'adapted to/for', 'having the ability to', 'designed to', 'modified to', 'made to', 'capable of or the like, according to the context. The term 'configured to' may not necessarily mean only 'specially designed to' in hardware. Instead, in some circumstances, the expression 'a device configured to' may mean that the device is 'capable of with another device or parts. For example, 'a device configured (or set) to perform the phrase A, B, and C' may be a dedicated device for performing a corresponding operation or may mean a general-purpose device capable of performing various operations inclusive of the corresponding operation.

Although the foregoing description in the present disclosure has been made with respect to specific embodiments, it is to be understood that the present disclosure is not limited to the specific embodiments and encompasses all of the various modifications, equivalents, and/or substitutions of various embodiments.

**Claims**

1.   A display system comprising:

     a display to display a screen based on image information to be displayed; and
     a power supply configured to support the display and supply electric power to the display in a wireless manner;
     wherein the display is configured to, when the display is spaced apart from the power supply by a predetermined distance or more, selectively operate in one of a power saving mode for lowering luminance of at least a portion of the screen and an ultra-power saving mode for turning OFF at least a portion of the screen while maintaining a turned-on state of the display.

2.   The display system according to claim 1, wherein the power supply comprises a stand having at least two support surfaces configured to extend at different angles with respect to a bottom surface and support the display, respectively.

3. The display system according to claim 2, wherein the stand comprises a bidirectional resonator to supply power to the display, and the bidirectional resonator further comprises a core and at least two windings respectively disposed on both sides of the core.

4. The display system according to claim 3, wherein the bidirectional resonator is arranged such that each of the at least two windings faces a corresponding one of the at least two support surfaces and the core is arranged at an angle and a distance, which is the same, with respect to the at least two support surfaces.

5. The display system according to claim 2, wherein the stand comprises a contact electrode to supply power to the display.

6. The display system according to claim 1, wherein the display comprises an alarm to indicate that the display is in the power saving mode or the ultra-power saving mode, while the display is operating in the power saving mode or the ultra-power saving mode.

7. The display system according to claim 6, wherein the alarm comprises at least one of a lamp, a beeper, and an indicator displayed on the screen.

8. The display system according to claim 1, wherein the display comprises:

   a power unit to receive power from the power supply;
   a light emitting unit to emit light based on the image information to be displayed; and
   a driver board configured to draw a current from the power unit and control supplying of current to the light emitting unit, and to control the current supplied to the light emitting unit so as to decrease or stop when a voltage of the current drawn from the power unit decreases, thereby controlling the display to operate in the power saving mode or the ultra-power saving mode.

9. The display system according to claim 8, wherein the driver board is configured to maintain the image information to be displayed, while the current supplied to the light emitting unit is controlled so as to decrease or stop so that the display is controlled to operate in the power saving mode or the ultra-power saving mode.

10. The display system according to claim 8, wherein the driver board is configured to monitor the voltage of the current drawn from the power unit and control the display to sequentially operate in the power saving mode and the ultra-power saving mode, based on the monitoring.

11. The display system according to claim 8, wherein the display further comprises:

   a power storage element charged by the current drawn from the power unit; and
   a connection element providing a current discharge path for the current discharged from the power storage element.

12. The display system according to claim 11, wherein according to a decrease in the voltage of the current drawn from the power unit, the current discharge path through the connection element is activated so that the current discharged from the power storage element is provided to the driver board.

13. The display system according to claim 11, wherein the display comprises a resistor to prevent inrush current for the power storage element, and wherein the driver board is configured to control the current supplied to the light emitting unit to gradually increase while charging of the power storage element is in progress.

14. The display system according to claim 11, wherein the driver board is configured to monitor a direction of a current flowing through the power storage element and to control the display to selectively operate one of the power saving mode or the ultra-power saving mode, based on the monitoring.

15. A method for driving a display including a power supply unit and a light emitting unit, the method comprising:

   displaying a screen by controlling light emissions of the light emitting unit, based on image information to be displayed;
   determining a decrease in a voltage of a current applied from the power supply unit; and
   in response to the determining the decrease in the voltage, selectively entering one of a power saving mode in which luminance of at least a portion of the light emitting unit is lowered or an ultra-power saving mode in which at least a portion of the light emitting unit is turned OFF while maintaining a turned-on state of the display.

# FIG. 1A

# FIG. 1B

# FIG. 1C

# FIG. 2

200

216 SCREEN DISPLAY UNIT

214 POWER STORAGE

210

212 POWER UNIT

226 POWER TRANSMITTER

224 CONVERTER

220

222 POWER RECEIVER

# FIG. 3A

$$\theta_1 = \theta_2$$
$$h_1 = h_2$$

# FIG. 3B

VOLTAGE OF TRANSMITTABLE
POWER

*0*
DISTANCE

# FIG. 4

# FIG. 5A

# FIG. 5B

*FIG. 5C*

EP 4 358 078 A1

# FIG. 6

# FIG. 7

# FIG. 8

310

320

*(a)*

310

320

*(b)*

310

310

320

*(c)*

310

320

*(d)*

# FIG. 9A

# FIG. 9B

VOLTAGE OF TRANSMITTABLE
POWER

0

DISTANCE

# FIG. 10

FIG. 11A

EP 4 358 078 A1

# FIG. 11B

# FIG. 12

**(a)**

$V_{super\_cap}$

**(b)**

$I_{super\_cap}$

$I_{LED}$

$t_4$ $t_5$

FIG. 13

# *FIG. 14*

*1310*

*1320*

*(a)*

*1310*

9

*1406*

*1320*

*(b)*

*1310*

*1406*

*1320*

*(c)*

*1310*

*1320*

*(d)*

<div align="center">

**INTERNATIONAL SEARCH REPORT**

</div>

| | |
|---|---|
| | International application No. |
| | **PCT/KR2022/012141** |

| | |
|---|---|
| **A.** | **CLASSIFICATION OF SUBJECT MATTER** |
| | **G09G 5/00**(2006.01)i; **G09G 5/10**(2006.01)i |
| | According to International Patent Classification (IPC) or to both national classification and IPC |

| | |
|---|---|
| **B.** | **FIELDS SEARCHED** |
| Minimum documentation searched (classification system followed by classification symbols) |
| | G09G 5/00(2006.01); G06F 3/041(2006.01); G06F 3/14(2006.01); G09G 3/00(2006.01); H02J 50/12(2016.01); H02J 50/80(2016.01); H02J 7/02(2006.01); H04B 1/40(2006.01) |
| Documentation searched other than minimum documentation to the extent that such documents are included in the fields searched |
| | Korean utility models and applications for utility models: IPC as above<br>Japanese utility models and applications for utility models: IPC as above |
| Electronic data base consulted during the international search (name of data base and, where practicable, search terms used) |
| | eKOMPASS (KIPO internal) & keywords: 디스플레이(display), 와이어리스(wireless), 전력 공급 장치(power transmitting apparatus), 절전 모드(power reduction mode), 거리(distance) |

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | KR 10-2012-0131584 A (LG ELECTRONICS INC.) 05 December 2012 (2012-12-05)<br>See paragraphs [0015]-[0062], [0099]-[0142] and [0168]-[0176]; and figures 1, 5-10 and 17-19. | 1-2,6-15 |
| Y | | 3-5 |
| Y | KR 10-2018-0111731 A (SAMSUNG ELECTRONICS CO., LTD.) 11 October 2018 (2018-10-11)<br>See paragraphs [0028]-[0069]; claims 1-2; and figure 1. | 3-4 |
| Y | KR 10-2014-0102987 A (SAMSUNG ELECTRONICS CO., LTD.) 25 August 2014 (2014-08-25)<br>See paragraphs [0027]-[0028]; and figure 1. | 5 |
| A | KR 10-2019-0100665 A (KANG, Dong Youn) 29 August 2019 (2019-08-29)<br>See paragraphs [0031]-[0070]; and figures 1-3. | 1-15 |
| A | US 2019-0305597 A1 (APPLE INC.) 03 October 2019 (2019-10-03)<br>See paragraphs [0018]-[0035]; and figure 1. | 1-15 |

| | | |
|---|---|---|
| ☐ Further documents are listed in the continuation of Box C. | ☑ See patent family annex. | |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 November 2022** | **17 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/012141**

| Patent document cited in search report | | | Publication date (day/month/year) | Patent family member(s) | | | Publication date (day/month/year) |
|---|---|---|---|---|---|---|---|
| KR | 10-2012-0131584 | A | 05 December 2012 | EP | 2533401 | A1 | 12 December 2012 |
| | | | | EP | 2533401 | B1 | 27 November 2013 |
| | | | | KR | 10-2012-0131967 | A | 05 December 2012 |
| | | | | US | 2012-0299966 | A1 | 29 November 2012 |
| KR | 10-2018-0111731 | A | 11 October 2018 | KR | 10-2014-0021095 | A | 20 February 2014 |
| | | | | KR | 10-2024015 | B1 | 23 September 2019 |
| | | | | US | 2014-0049211 | A1 | 20 February 2014 |
| | | | | US | 9325196 | B2 | 26 April 2016 |
| KR | 10-2014-0102987 | A | 25 August 2014 | CN | 103997075 | A | 20 August 2014 |
| | | | | CN | 103997075 | B | 13 March 2018 |
| | | | | EP | 2767972 | A1 | 20 August 2014 |
| | | | | JP | 2014-157355 | A | 28 August 2014 |
| | | | | JP | 6393486 | B2 | 19 September 2018 |
| | | | | KR | 10-2113258 | B1 | 20 May 2020 |
| | | | | US | 2014-0232325 | A1 | 21 August 2014 |
| | | | | US | 9711992 | B2 | 18 July 2017 |
| KR | 10-2019-0100665 | A | 29 August 2019 | | None | | |
| US | 2019-0305597 | A1 | 03 October 2019 | CN | 110365085 | A | 22 October 2019 |
| | | | | CN | 209562213 | U | 29 October 2019 |
| | | | | KR | 10-2019-0116074 | A | 14 October 2019 |
| | | | | KR | 10-2312726 | B1 | 13 October 2021 |

Form PCT/ISA/210 (patent family annex) (July 2022)